# EUROPÄISCHE PATENTSCHRIFT

(11) **EP 1 943 436 B1**
(45) Veröffentlichungstag und Bekanntmachung des Hinweises auf die Patenterteilung: **02.03.2011**
(21) Anmeldenummer: 06828872.9
(22) Anmeldetag: 26.10.2006
(51) Int. Cl.: F16F 9/02, F16F 7/09

(54) **ANSCHLAGDÄMPFER**
STOP DAMPER
AMORTISSEUR DE BUTEE

(30) Priorität: 28.10.2005 DE 102005052125
(43) Veröffentlichungstag der Anmeldung: 16.07.2008
(73) Patentinhaber: KARL SIMON GmbH & Co. KG, 78733 Aichhalden (DE)
(72) Erfinder: BANTLE, Ulrich, 72186 Empfingen (DE); ESCHLE, Jürgen, 78733 Aichhalden (DE)
(74) Vertreter: Fleck, Hermann-Josef
(86) Internationale Anmeldenummer: PCT/EP2006/010344
(87) Internationale Veröffentlichungsnummer: WO 2007/048614

(56) Entgegenhaltungen:
- DE-B3- 10 313 659
- DE-U1-202004 019 395

## Beschreibung

Die Erfindung betrifft einen Anschlagdämpfer mit einem Dämpferkörper der einen Zylinder aufweist, wobei in einem Aufnahmeraum des Zylinders ein Kolben verstellbar geführt ist, wobei der Zylinder eine Gleitfläche aufweist, an der der Kolben mit einem Dichtelement anliegt, wobei infolge der Verstellung des Kolbens mittels dem im Aufnahmeraum gebildeten Luftdruck eine auf den Kolben wirkende Bremskraft ausübbar ist, wobei der Aufnahmeraum zum Abbau des Luftdruckes über eine luftleitende Verbindung mit der Umgebung in Verbindung steht.

Ein derartiger Anschlagdämpfer ist aus der DE 103 13 659 B3 bekannt. Der Anschlagdämpfer weist einen Zylinder auf, in dem ein Kolben linear verstellbar geführt ist. Der Kolben ist dabei abgedichtet an der Innenwandung des Zylinders geführt, so dass sich zwei Druckräume im Zylinder bilden.

In einem Überdruckraum wird die Luft beim Einfahren des Kolbens komprimiert. Gleichzeitig entsteht in einem Unterdruckraum ein Luftdruck der kleiner ist als der Druck im Überdruckraum.

Um einen kontinuierlichen Druckausgleich zwischen diesen beiden Druckräumen stattfinden zu lassen sind Überströmkanäle mit kleinem Querschnitt vorgesehen. Durch diese strömt die Luft aus dem Überdruckraum dem Unterdruckraum zu. Zur Verstärkung der Bremskraft weist der Kolben einen Balgabschnitt auf. Dieser wird infolge eines zwischen dem Überdruckraum und dem Unterdruckraum anstehenden Differenzdruckes aufgebläht. Er legt sich dabei an die Innenwandung des Zylinders an und erhöht so die Reibung des Kolbens. Der Balgabschnitt ist als Hülse aus einem weichelastischen Material gefertigt. Zur Fixierung des Balgabschnittes ist der Kolben zweiteilig ausgeführt und der Balgabschnitt zwischen den Kolbenteilen eingespannt. Dieser bekannte Anschlagdämpfer weist einen hohen Teileaufwand auf.

Aus der dem Oberbegriff des Anspruchs 1 entsprechenden DE 20 2004 019 395 U1 ist ein weiterer Anschlagdämpfer bekannt. Dieser weist wieder einen Zylinder auf, in dem ein Kolben verstellbar ist. Der Kolben weist ein umlaufendes Dichtelement auf, das dichtend an der Innenwand des Zylinders anliegt. Der Kolben kann wiederum zur Erzeugung einer Dämpfungswirkung gegen einen sich aufbauenden Luftdruck im Zylinder verschoben werden. Der Abbau dieses Luftdruckes erfolgt über eine kleine Öffnung, die mit der Umgebung in luftleitender Verbindung steht.

Es ist Aufgabe der Erfindung, einen Anschlagdämpfer der eingangs erwähnten Art zu schaffen, der eine verbesserte Bremswirkung aufweist.

Die Aufgabe der Erfindung wird dadurch gelöst, dass das Dichtelement des Kolbens und die Gleitfläche des Zylinders sich zumindest bereichsweise über eine definierte Reibflächengeometrie berühren, und dass die Rauhtiefe der Gleitfläche Ra < 1 µm und die Rauhtiefe der zugewandten Fläche des Dichtelementes zumindest bereichsweise ≤ 4,5 µm ist.

Bei dieser Reibflächenpaarung stellt sich ein ideales Dämpfungsverhalten ein. Dabei ist die Reibung sowohl bei hoher als auch bei niedriger Einfahrgeschwindigkeit des Kolbens in den Zylinder stets so, dass kein unzulässig hoher Haftreibungsanteil die Einfahrbewegung behindert.

Es hat sich auch gezeigt, dass die Luftableitung aus dem Aufnahmeraum infolge der Reibflächenpaarung optimiert ist. Eine deutlich höhere Rauhtiefe würde zu einer starken Luftableitung zwischen dem Dichtelement und der Gleitfläche führen, was zu einem deutlichen Abfall der Dämpfungswirkung führt.

Die Aufgabe der Erfindung wird auch dadurch gelöst, dass das Dichtelement des Kolbens und die Glestfläche des Zylinders sich zuwindest bereichsweise über eine definierte Reibflächengeometrie berühren, und dass die Oberflächenrauhtiefe des Dichtelementes und/oder der Gleitfläche von einer periodischen Struktur, beispielsweise einer Rillenstruktur erzeugt ist.

Bei dieser Gestaltung ergibt sich eine gute Führung des Dichtelementes während der Verstellbewegung des Kolbens. Die Führung kann zusätzlich dadurch optimiert werden, dass die Rillen der Rillenstruktur in ihrer Längserstreckung quer zur Bewegungsrichtung des Kolbens angeordnet sind. Die Rillen der Rillenstruktur können dabei umlaufend und quer zur Bewegungsrichtung des Kolbens in die Gleitfläche eingetieft sein, wobei die Rillen im Winkel ≥ 0 und <90° zur Bewegungsrichtung des Kolbens stehen. Vorteilhafter Weise ist der Winkel im Bereich zwischen ≥ 0 und <5°. Eine solche Kontur kann drehtechnisch einfach erzeugt werden. Die dann entstandene Oberflächengeometrie weist Rauhigkeitskennwerte auf, die das Verschleißverhalten optimal beeinflussen. Bevorzugter Weise kann es dabei vorgesehen sein, dass der Anstellwinkel der Rillen so gewählt ist, dass das ringförmig umlaufende Dichtelement über seinen gesamten Umfang nur eine geringe Anzahl von Rillen gleichzeitig übergreift. Damit ist stets nur ein Rillenquerschnitt verfügbar, der, abhängig von der Elastizität des Dichtelementes definierte Luftdurchtrittsspalten bildet.

Gemäß einer bevorzugten Ausgestaltungsvariante der Erfindung ist es vorgesehen, dass das Dichtelement aus einen weichelastischem Werkstoff, beispielsweise aus einem Elastomer gebildet ist und dass die Oberflächen des Dichtelementes in dem der Gleitfläche zugewandten Bereich eine Rauhtiefe Ra ≥ 0, 4 µm aufweist. Es hat sich gezeigt, dass der Elastomer Werkstoff für die anstehende Dichtaufgabe gute Materialeigenschaften bietet. Allerdings neigt dieser Werkstoff bei einer Rauhtiefe < 0,4 µm vorliegenden Anwendungsfall dazu, eine zu starke adhäsive Bindung mit der Gleitfläche des Zylinders einzugehen. Dies führt letztlich dazu, dass dann ein schlechtes Dämpfungsverhalten bewirkt ist. Vorzugsweise ist dabei vorgesehen, dass das Dichtelement aus einem thermoplastischen Elastomer besteht. Dieser Werkstoff lässt sich kostengünstig im Spritzgießverfahren verarbeiten. Die Materialkosten können dabei auch dadurch minimiert werden, dass ein thermoplastischer Werkstoff auf Olefinbasis verwendet wird.

Ein erfindungsgemäßer Anschlagdämpfer kann insbesondere auch dadurch gekennzeichnet sein, dass die Gleitfläche des Zylinders zumindest bereichsweise eine Rauhtiefe Ra ≥ 0,05 µm aufweist.

Für die gegenüber dem Dichtelement harte Gleitfläche stellt das einen Rauhtiefenbereich dar, bei dem ein Anhaften des Dichtelementes infolge von Kohässionseinflüssen effektiv verhindert ist.

Gemäß einer bevorzugten Ausgestaltung der Erfindung kann es vorgesehen sein, dass der Kolben einen Balgabschnitt aufweist, der abhängig von den Druckverhältnissen im Aufnahmeraum in Wirkverbindung mit dem Zylinder steht. Der Balgabschnitt bläht sich während der Einschubbewegung des Kolbens in den Zylinder aufgrund des im Zylinder anstehenden Innendruckes auf und legt sich an die Gleitfläche des Zylinders an und unterstützt dabei die Bremswirkung.

Dabei kann es vorgesehen sein, dass der Balgabschnitt zumindest in dem mit dem Zylinder in Kontakt tretenden Wirkbereich Bereiche mit unterschiedlicher Dehnfähigkeit aufweist.

Der Erfinder hat erkannt, dass der Balgabschnitt in Richtung der Verschiebebewegung eine gewisse Eigensteifigkeit haben muss, damit er aufgrund der beim Bremsvorgang auftretenden Bremskräfte nicht unzulässig verformt wird. Andererseits wird aber bei einem Balgabschnitt mit hoher Eigensteifigkeit ein hoher Energieanteil infolge der Dehnarbeit vernichtet. Dadurch, dass der Balgabschnitt nun Bereiche unterschiedlicher Dehnfähigkeit aufweist, kann die Dehnung des Balges in den Bereichen mit hoher Dehnfähigkeit mit geringer Energieverzehrung erfolgen. Damit lässt sich der aufgebaute Innendruck im Aufnahmeraum effektiv in Bremsarbeit umwandeln. Gleichzeitig steifen aber die Bereiche mit geringer Dehnfähigkeit den Balgabschnitt ausreichend derart aus, dass er infolge der wirkenden Bremskräfte nicht unzulässig deformiert wird.

Ein solcher Anschlagdämpfer lässt sich vorzugsweise dann mit geringem Teileaufwand verwirklichen, wenn vorgesehen ist, dass die Bereiche unterschiedlicher Dehnfähigkeit von Teilen des Balgabschnittes gebildet sind, die unterschiedliche Wandungsstärken aufweisen. Der Balgabschnitt kann dann einteilig ausgeführt sein.

Große Dehnbereiche können einfach dann realisiert werden, wenn vorgesehen ist, dass der Balgabschnitt rillenförmige Ausnehmungen aufweist, die eine Querschnittsänderung des Balgabschnittes bilden. Wenn der Anschlagdämpfer dabei derart ausgeführt ist, dass die Ausnehmungen in Richtung der Verschiebebewegung des Kolbens oder im Winkel kleiner als 90° zur Richtung der Verschiebebewegung oder spiralförmig verlaufen, bleibt die Eigensteifigkeit des Balgabschnittes in Richtung der Verstellbewegung des Kolbens erhalten.

Gemäß einer weiteren Erfindungsvariante kann es vorgesehen sein, dass in Abhängigkeit von der Höhe des Luftdruckes eine Verstellanordnung des Kolbens betätigbar ist, und dass die Verstellanordnung einen Bremsabschnitt in Wirkverbindung mit dem Zylinder zur Dämpfung der Verstellbewegung des Kolbens bringt.

Der Bremsabschnitt wird somit über die Verstellanordnung in Abhängigkeit vom Luftdruck geschaltet. Damit kann dann die Bremswirkung des Kolbens erhöht werden.

Bevorzugter Weise kann es dabei vorgesehen sein, dass der Kolben an eine Kolbenstange angeschlossen ist, und dass die Verstellanordnung mittels der Kolbenstange betätigbar ist. Dann kann die über die Kolbenstange eingeleitete Kraft zur Betätigung der Verstellanordnung genutzt werden.

Eine einfache und besonders wirksame Bremsanordnung ergibt sich dann, wenn vorgesehen ist, dass bei Betätigung der Verstellanordnung die Querschnittsabmessung des Bremsabschnittes veränderbar ist. Gemäß einer bevorzugten Ausgestaltungsvariante der Erfindung kann es vorgesehen sein, dass der Balgabschnitt und der Kolben einteilig miteinander verbunden sind und/oder dass die Kolbenstange einteilig an den Kolben angeformt ist. Die einteilige Ausführung von Balgabschnitt und Kolben verringert den Teile- und Montageaufwand deutlich.

Insbesondere verringert sich der Dichtungsaufwand, der zur Abdichtung des Balgabschnittes gegenüber dem Kolben gemäß Stand der Technik notwendig ist.

Der Erfinder hat erkannt, dass die üblicherweise aus unterschiedlichen Materialien bestehenden und für völlig unterschiedliche Zwecke eingesetzten Bauteile, Balgabschnitt und Kolben zu einer Einheit zusammengefasst werden können. Der konstruktive Aufwand lässt sich noch zusätzlich dann reduzieren, wenn vorgesehen ist, dass die Kolbenstange einteilig an den Kolben angeformt ist.

Eine mögliche Erfindungsausgestaltung kann derart sein, dass der Kolbenstange ein Stützkörper zugeordnet ist oder diese einen solchen aufweist, dass der Stützkörper eine Anschlagseite aufweist, die außerhalb des Dämpferkörpers angeordnet ist, und dass sich der Stützkörper über einen Absatz an dem Kolben abgestützt ist.

Mit dem Stützkörper kann je nach Auslegung die Kolbenstange ausgesteift werden. Gleichzeitig kann über den Stützkörper auch die Aufprallkraft beispielsweise einer auftreffenden Tür oder Klappe aufgenommen und zumindest teilweise direkt in den. Kolben übertragen werden.

Dies ist besonders auch dann von Vorteil, wenn vorgesehen ist, dass der Kolben und der Balgabschnitt aus weichelastischem Material bestehen. Dann wird der Kolben von der Aufprallkraft federelastisch beaufschlagt und damit über Hysterese ein Teil der Aufprallkraft vernichtet wird.

Die weichelastische Ausbildung von Kolben und Balgabschnitt ermöglichen auch die Verwirklichung einer Werkstoffpaarung mit dem Zylinder die über hohe. Reibwerte eine starke Dämpfung ermöglichen.

Wenn auch die Kolbenstange aus einem weichelastischen Material besteht, ist aus Festigkeitsgründen vorgesehen, dass die Kolbenstange mittels eines Mantelteils ausgesteift ist.

Eine denkbare Erfindungsalternative ist dergestalt, dass die Kolbenstange auf ihrer dem Kolben abgewandten Seite ein Prallstück aus weichelastischem Material bildet.

Über das Prallstück kann die Aufprallkraft aufgenommen und bereits teilweise gedämpft werden.

Wenn vorgesehen ist, dass der Balgabschnitt einen zylinderförmigen Teil aufweist, der im Abstand zur Innenwandung des Zylinders gehalten ist, und dass der von dem zylinderförmigen Teil umgebene Bereich einem Druckraum des Zylinders zugeordnet ist, dann kann sich der Balgabschnitt bei Druckbeaufschlagung umlaufend an die Innenwandung des Zylinders anlegen und dort eine gleichmäßige und große Bremskraft bewirken.

Dabei lässt sich eine effektive Umsetzung des Druckes in Bremskraft dann wirkungsvoll erreichen, wenn vorgesehen ist, dass die Bereiche unterschiedlicher Dehnfähigkeit im Bereich des zylinderförmigen Teils des Balgabschnittes angeordnet sind.

Die Funktionalität des Balgabschnittes lässt sich noch zusätzlich dann erhöhen, wenn vorgesehen ist, dass der zylinderförmige Teil des Balgabschnittes eine Federaufnahme bildet, in der eine Feder zumindest teilweise aufgenommen ist, und dass die Feder den Kolben entgegen der Einschubbewegung des Kolbens in den Zylinder gegenüber dem Zylinder abstützt.

Eine weitere konstruktive Vereinfachung ergibt sich dadurch, dass das am Balgabschnitt angeformte Dichtelement einen Druck- und einen Unterdruckraum des Zylinders gegeneinander abdichtet.

Wenn vorgesehen ist, dass sich die Bereiche unterschiedlicher Dehnfähigkeit bis hin zu dem angeformten Dichtelement erstrecken, dann ergeben sich großbereichige Dehnstellen.

Die Bremswirkung des Anschlagdämpfers lässt sich noch dadurch steigern, dass der Unterdruck-, und/oder der Druckraum mittels wenigstens einer Öffnung mit der Umgebung in luftleitender Verbindung stehen.

Dies wird insbesondere dadurch möglich, dass die Öffnungen oder den Öffnungen zugeordnete Drosselglieder so gestaltet sind, dass eine dosierte Luftströmung erzielt ist.

Beispielsweise kann eine Luft-Volumenströmung zu einem kontrollierten Druckabbau und gleichzeitig eine gute Dämpfung erreicht werden, wenn vorgesehen ist, dass wenigstens eine der Öffnungen einen Durchmesser D < 0,2 mm, vorzugsweise < 0,1 mm aufweist. Insbesondere Durchmesser < 0,1 mm zeigen eine gute Drosselwirkung für die Anwendung im Möbelbau.

Diese Dämpfung kann insbesondere auch befriedigend dadurch erreicht werden, dass das Verhältnis der Querschnittsfläche des Kolbens in dem, dem Hohlraum zugewandten Bereich zu dem Öffnungsquerschnitt der Öffnung größer als 4000/1 ist.

Die Erfindung wird im Folgenden anhand eines in den Zeichnungen dargestellten Ausführungsbeispieles näher erläutert. Es zeigen:
- Fig. 1: einen Anschlagdämpfer in Seitenansicht und im Schnitt,
- Fig. 2: eine, in Fig. 1 mit "A" gekennzeichnete Detaildarstellung,
- Fig. 3: eine weitere Ausgestaltung eines Anschlagdämpfers in Sei- tenansicht und im Schnitt,
- Fig. 4: eine, in Fig. 3 mit "A" gekennzeichnete Detaildarstellung,
- Fig. 5: eine, in Fig. 3 mit "B" gekennzeichnete Detaildarstellung,
- Fig. 6: in Seitenansicht ein Bauteil des Anschlagdämpfers, das eine Kolbenstange und einen Kolben umfasst,
- Fig. 7: das Bauteil gemäß Figur 6, gemäß dem in Figur 6 mit VII - VII gezeigten Schnittverlauf,
- Fig. 8: eine alternative Gestaltung des Bauteils gemäß Figuren 6 und 7,
- Fig. 9: das Bauteil gemäß Figur 8 entlang dem in Figur 8 mit VIII - VIII gekennzeichneten Schnittverlauf,
- Fig. 10: in Seitenansicht eine Kombination des Bauteiles gemäß Figuren 8 und 9 mit einem Mantelteil,
- Fig. 11: die Darstellung gemäß Figur 10, gemäß dem in der Figur 10 mit XI - XI gekennzeichneten Schnittverlauf und
- Fig. 12: einen Ausschnitt aus einem Zylinder des Anschlagdämpfers ge- mäß Figur 1.

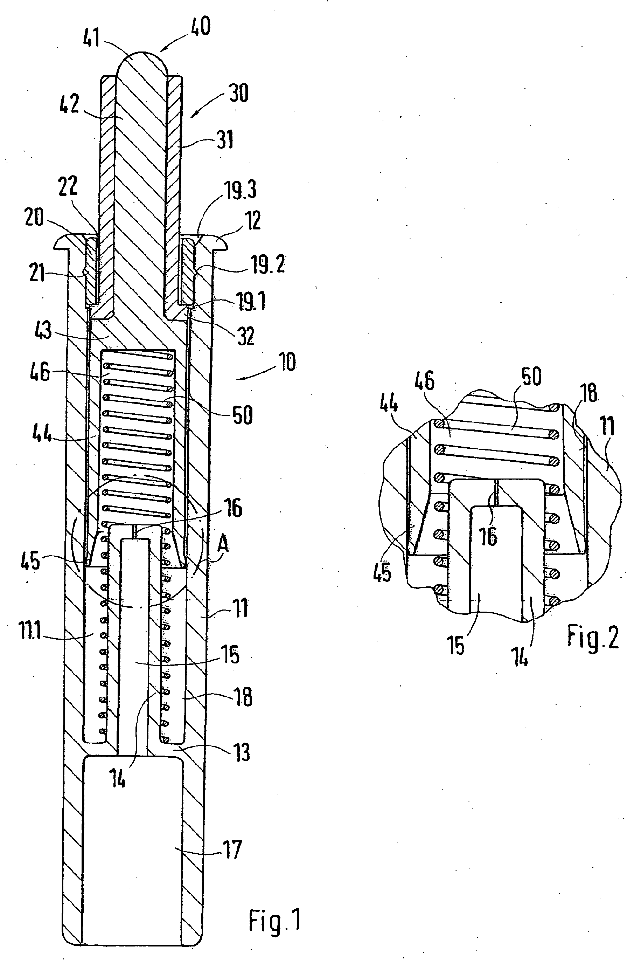

In der Fig. 1 ist ein Anschlagdämpfer mit einem längs gestreckten Dämpferkörper 10 dargestellt. Der Dämpferkörper 10 bildet einen Zylinder 11. Der Zylinder 11 umgibt einen Aufnahmeraum 11.1, in dem ein Kolben 43 eines Gleitelementes 40 linear verstellbar gehalten ist.

In den Aufnahmeraum 11.1 ragt eine Federführung 14, die in Form eines Hohlzylinders an einen Boden 13 des Dämpferkörpers 10 einteilig angeformt ist. Im Bereich seiner dem Boden 13 abgewandten Seite weist der die Federführung 14 eine Öffnung 16 in Form einer Bohrung auf. Die Öffnung 16 schafft eine räumliche Verbindung zwischen dem Aufnahmeraum 11.1 und einem von der Federführung umgebenen Luftführungskanal 15. Dabei ist der Durchmesser der Öffnung < 0,1 mm um einen dosierten Luftaustausch zwischen dem Aufnahmeraum 11.1 und dem Luftführungskanal 15 zu ermöglichen. Anstatt einer Bohrung kann auch jeder beliebige, sonstige Öffnungsquerschnitt verwirklicht sein.

Gute Dämpfungsergebnisse werden erreicht, wenn die Querschnittsfläche des Kolbens 43 in dem dem Aufnahmeraum 11.1 zugewandten Endbereich zu dem Öffnungsquerschnitt der Öffnung im Verhältnis 4000/1 steht.

Der Luftführungskanal 15 läuft in einem Hohlraum 17 aus, der von einem zylinderförmigen Endabschnitt des Dämpferkörpers 10 gebildet ist. Der Dämpferkörper 10 ist als Spritzgußteil gebildet. Die Innenwandung des Zylinders 11 ist als Gleitfläche 18 ausgebildet. Sie ist aus Entformungsgründen mit einem leichten Öffnungskonus ausgeführt, so dass sich der Aufnahmeraum 11.1 zum Bereich der dem Boden 13 gegenüberliegenden Eintrittsöffnung leicht erweitert.

Wie bereits vorstehend erwähnt wurde, ist in dem Aufnahmeraum 11.1 ein Gleitstück 40 geführt. Das Gleitstück 40 ist einteilig ausgeführt und umfasst eine Kolbenstange 42, den Kolben 43 und einen Balgabschnitt 44. Das Gleitstück 40 ist ebenfalls als Spritzgußteil ausgeführt und besteht aus einem weichelastischen Werkstoff, beispielsweise aus einem Elastomer auf Olefinbasis, insbesondere aus einem TPE-Material, das auch mit Gleitmitteln zur Verbesserung der Reibungseigenschaften versetzt sein kann.

Der Zylinder 11 hingegen besteht aus einem thermoplastischen Werkstoff, beispielsweise aus ABS (mit oder ohne Gleitmittel) oder aus POM.

Die Kolbenstange 42 ist an der dem Balgabschnitt 44 gegenüberliegenden Seite an den Kolben 43 angeformt. Sie ist im Querschnitt zylinderförmig und ragt aus dem Aufnahmeraum 11.1 des Dämpferkörpers 11 heraus. Endseitig ist sie mit einem als Endkappe ausgebildeten Prallstück 41 versehen.

In alternativer Ausführung kann auch auf die an den Kolben 43 angeformte Kolbenstange 42 verzichtet werden. Die Kolbenstange wird dann alleine von dem Stützkörper 30 gebildet. Eine mechanische Verbindung zwischen dem Kolben 43 und dem Stützkörper 30 ist bei dem vorliegenden Aufbau nicht notwendig. Allerdings ist dann eine Zentrierung dieser beiden Bauteile vorteilhaft.

Die Kolbenstange 42 ist von einem Stützkörper 30 umgeben. Dieser weist hierzu eine hohlzylindrische Aufnahme auf, die im Querschnitt an den Außenquerschnitt der Kolbenstange 42 angepasst ist. Sie ist von einem Mantelteil 31 gebildet. Das Material des Stützkörpers 30 ist biegesteif, so dass die Kolbenstange 42 ausgesteift wird. Wie die Fig. 1 deutlich erkennen lässt, stützt sich der Stützkörper 30 mit einem radial verbreiterten Absatz 32 auf dem Kolben 43 ab. Der Absatz 32 kann zur Führung des Kolbens 43 ausgenutzt werden. Dann ist er radial so verbreitert, dass er mit der Innenwandung 18 des Aufnahmeraumes 11.1 eine Führung bildet. Je nach Auslegung des Absatzes 32 kann insbesondere auch die Verkantungsgefahr für den Kolben 43 minimiert werden.

Der Balgabschnitt 44 ragt in den Aufnahmeraum 11.1 hinein. Er ist als Hohlzylinder mit vorzugsweise gleich bleibender Wandstärke ausgeführt, so dass er um seinen Umfang gleiche Werkstückeigenschaften, insbesondere ein einheitliches Dehnverhalten aufweist.

Die Wandung kann aber auch ballig oder zur Erreichung einer variierenden Kraft mit veränderlichem Querschnitt ausgeführt werden. Beispielsweise kann ein Querschnitt mit vermindertem Querschnitt verwendet sein. An seinem freien offenen Ende weist der Balgabschnitt 44 ein umlaufendes Dichtelement 45 auf, das mit einer Dichtlippe an der Gleitfläche 18 des Aufnahmeraumes 11.1 dichtend anliegt. Das Dichtelement 45 ist dabei so ausgeführt, dass es über den gesamten Gleitbereich dichtet und aufgrund seiner Materialelastizität den Öffnungskonus des Aufnahmeraumes 11.1 ausgleicht.

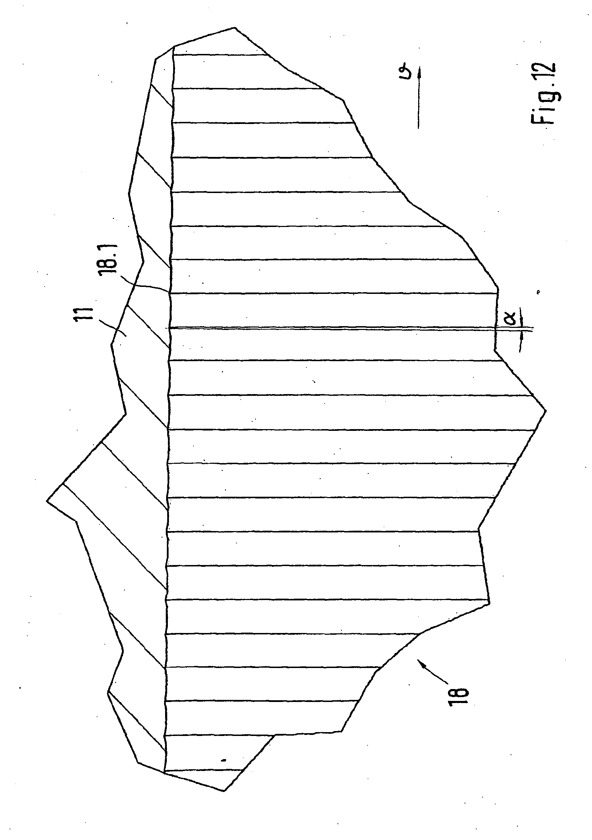

Die Rauhtiefe Ra der Gleitfläche 18 liegt im Bereich zwischen 0,05 und 1 µm. Die Rauhtiefe des Dichtelementes 45 im Anlagebereich an die Gleitfläche 18 liegt im Bereich zwischen 0,4 - 4,5 µm. Diese Reibflächenpaarungen ergeben ein ideales Dämpfungsverhalten. Für den Einsatz als Möbelanschlagdämpfer hat sich für die dort gegebenen Beanspruchungen eine gute Dämpfkraft bei einer Rauhtiefe Ra 0,05 - 0,2 µm für die Gleitfläche 18 und Ra = 0,5 - 3 µm für das Dichtelement 45 ergeben. Die Oberflächenrauhigkeit wird dabei von einer Rillenstruktur gebildet, wie dies die Figur 12 veranschaulicht. Dabei verläuft die Längserstreckung der Rillen 18.1 quer zur Bewegungsrichtung des Kolbens 43 (v = siehe Figur 1). Die Rillenstruktur wird dabei in der Werkzeugform (dem Spritzgießwerkzeug) vorgegeben. Vorzugsweise wird über eine gedrehte Oberfläche eine Rillenstruktur erzeugt, so dass die an der Innenwandung des Zylinders umlaufende Rillen 18.1 im Winkel (α) (beispielsweise 0,2° - 5 °) zu der Bewegungsrichtung des Kolbens 43 stehen. Der Winkel (α) (Vorschub) ist dabei ausreichend klein, dass das lippenförmig Dichtelement im Dichtbereich stets nur eine geringe Anzahl von Rillen 18 (< 20 Rillen (18)) gleichzeitig überfährt.

Die in der Figur 12 veranschaulichte Rillenstruktur stellt eine ausreichende Dichtwirkung sicher, so dass das Dichtelement den Druckaufbau sicherstellt.

Die Rillenstruktur (die Negativkontur des Werkzeuges) kann poliert sein, so dass sich die in Figur 12 gezeigte Oberflächenstruktur ergeben kann. Diese Rillenstruktur hat einen hohen Trageteil, womit die Gleiteigenschaften beeinflusst werden können.

Die Detailansicht gemäß Fig. 2 lässt die exakte Ausführung des Dichtelementes 45 genau erkennen.

Der Balgabschnitt 44 umgibt eine Federaufnahme 46, in die eine Feder 50 eingestellt ist. Dabei ist die Federaufnahme 46 so dimensioniert, dass sie ein Ausknicken der Feder 50 verhindert.

Die Feder 50 stützt sich mit ihrem einen Ende an dem Kolben 43 ab. Das andere Federende legt sich an den Boden 13 an. Die Feder 50 ist über die Federführung 14 gestellt, die ebenfalls ein Ausknicken der Feder 50 verhindert. Die Federaufnahme 46 ist so ausgebildet, dass die Federführung 14 und die Feder 50 beim Einschieben des Gleitstückes 40 darin Platz finden und die Kolbenbewegung dabei nicht behindert wird.

Zur Fixierung des Gleitstückes 40 in der in Fig. 1 dargestellten ausgefahrenen Endstellung dient ein Anschlagelement 20. Dieses ist als Ring ausgeführt und weist an seinem Außenumfang einen umlaufenden wulstförmigen Rastansatz 21 auf. Das Anschlagelement 20 weist eine hohlzylindrische Durchführung 22 auf, durch die das Mantelteil 31 des Stützkörpers 30 hindurchgeführt ist. Dabei ist der Außendurchmesser des Mantelteils 31 auf den Innendurchmesser der Durchführung angepasst, so dass sich eine stabile Linearführung für den Stützkörper 30 ergibt. Dabei ist die Materialpaarung zwischen dem Stützkörper 30 und dem Anschlagelement 20 so gewählt, dass sich eine leichtgängige Lagerung ergibt.

Das Anschlagelement 20 kann bei der Montage über eine Einführerweiterung 19.3 des Dämpferkörpers 10 leicht in den Aufnahmeraum 11.1 eingeführt werden. Die Einführbewegung wird dabei mittels eines Absatzes 19.1 des Dämpferkörpers 10 begrenzt. In seiner Montagestellung rastet das Anschlagelement 20 mit seinem Rastansatz 21 in die Rastaufnahme 19.2 ein.

In der in Fig. 1 gezeigten Endstellung stützt das Anschlagelement 20 den Stützkörper 30 an dem Absatz 32 und damit den Kolben 43 gegen die Vorspannung der Feder 50 ab.

Nachfolgend soll kurz die Funktionsweise des Anschlagdämpfers beschrieben werden, der an beispielsweise einem Möbelstück mit einer anscharnierten Klappe zum Einsatz kommt. Üblicherweise hat der Möbelkorpus des Möbelstücks eine Aufnahmebohrung, in die der Dämpferkörper 10 mit seiner zylindrischen Außenkontur eingesetzt werden kann. Dabei schlägt der Flansch 12 des Dämpferkörpers 10 an dem Möbelkorpus im Bereich der Aufnahmebohrung an.

Die sich schließende Klappe trifft zunächst auf das Prallstück 41 der Kolbenstange 42 auf. Aufgrund der elastischen Materialeigenschaften des Prallkörpers 41 wird das mechanische Aufprallgeräusch der Klappe kompensiert. Abhängig von der Auftreffenergie der Klappe wird der Prallkörper 41 verformt. Durch starken Aufprall wird der Prallkörper 41 vollständig in das Mantelteil 31 hinein verformt und die Klappe kommt in Kontakt mit dem freien Ende des Mantelteils 31. Über die Kolbenstange 42 bzw. das Mantelteil 31 wird die Kraft auf den Kolben 43 übertragen. Die ringförmige Anlage des Absatzes 32 an dem Kolben 43 sichert dabei eine gleichmäßige Krafteinleitung. Je nach Stärke der Aufprallenergie kann ein Energieteil infolge der elastischen Verformung des Kolbens 43 gedämpft werden.

Der Kolben 43 wird in den Aufnahmeraum 11.1 hinein verschoben. Dabei baut sich ein Druck im Aufnahmeraum 11.1, unterstützt durch die Dichtwirkung der Dichtung 45 auf. Der Druck wird gleichzeitig über die Öffnung 16 abgebaut. Geschieht der Druckaufbau in kurzer Zeitdauer, so erfolgt der Druckabbau langsam und kontinuierlich über die Öffnung 16. Es entsteht ein dämpfender Überdruck im Aufnahmeraum 11.1. Dieser Überdruck wirkt auf den Balgabschnitt 44. Da in dem Zwischenraum zwischen der Innenwandung 18 und der Außenfläche des Balgabschnittes 44 Umgebungsdruck herrscht, entsteht ein Druckgefälle.

Dieses bläht den Balgabschnitt 44 auf, so dass er sich an die Innenwandung 18 anlegt. Er unterstützt dabei die Dämpfung aufgrund der Gleitreibung. Aufgrund der weichelastischen Materialeigenschaft des Balgabschnittes 44 ist die Reibung entsprechend groß. Die in Figur 12 dargestellte Rillenstruktur stellt dabei sicher, dass der Balgabschnitt sich dabei nicht zusätzlich zu stark adhäsiv an die Innenwandung 18 haftet. Dadurch würde nämlich eine sehr starke Gleitreibung entstehen, die zu einem hohen Verschleiß des Balgabschnittes 44 führt. Die Rillenstruktur unterstützt damit effektiv ein günstiges, gleichmäßiges Dämpfungsverhalten bei gleichzeitiger Verschleißoptimierung. Wenn das Druckgefälle absinkt, kehrt der Balgabschnitt 44 wieder in seine Ausgangsposition zurück.

Nach einer Entlastung der Kolbenstange 42 kehrt der Kolben 43 wieder, unterstützt durch die Feder 50 in seine Ausgangsstellung gemäß Fig. 1 zurück. Dabei wird Umgebungsluft über die Öffnung 16 in den Aufnahmeraum 11.1 eingesaugt.

Die Öffnung ist so dimensioniert, dass folgende Eigenschaften des Anschlagdämpfers erfüllt sind:
- kontrollierter, langsamer Druckabbau zur Erreichung einer guten Dämpfung
- schneller Druckausgleich bei der Rückstellbewegung des Kolbens 43

Diese Eigenschaften können mit den in den Ansprüche 11 und/oder 12 beschriebenen Verhältnissen optimal erreicht werden.

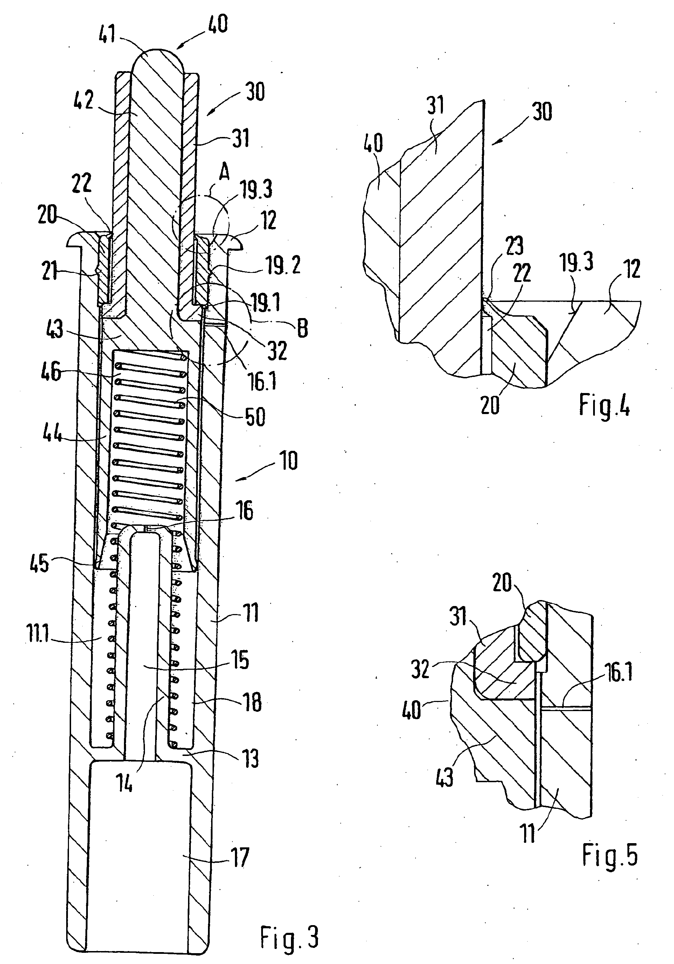

In den Fig. 3 bis 5 ist eine weitere Ausgestaltungsvariante eines Anschlagdämpfers gezeigt. Die dargestellte Konstruktion entspricht im Wesentlichen der Gestaltung gemäß den Fig. 1 und 2, weswegen auf die obigen Ausführungen verwiesen und nur auf die Unterschiede eingegangen wird.

Wie das Detail "A" gemäß Fig. 2 veranschaulicht, ist im Bereich des Anschlagelementes 20 eine Dichtung 23 vorgesehen, die den Außenumfang des Mantelteiles 31 des Stützkörpers 30 abdichtet. Damit wird, in Zusammenarbeit mit der Dichtung 45 des Balgabschnittes 44 ein gegenüber der Umgebung abgedichteter Unterdruckraum 22 geschaffen. Zu diesem Zweck könnte die Dichtung 23 an einer beliebig anderen Stelle angeordnet sein.

Der Unterdruckraum steht über einer Öffnung 16.1 (siehe Fig. 5) in räumlicher Verbindung mit der Umgebung. Die Öffnung 16.1 weist zum kontrollierten Druckausgleich die in den Ansprüchen 11 und/oder 12 beschriebenen Gestaltung auf. Beim Einschieben des Kolbens 43 bildet sich in dem Unterdruckraum 22 ein gegenüber der Umgebung geringerer Druck. Damit entsteht zwischen dem Aufnahmeraum 11.1 und dem Unterdruckraum 22 ein Druckgefälle, das zum Aufblähen des Balgabschnittes 44 mit starker Bremswirkung führt.

An dieser Stelle soll erwähnt werden, dass die Funktion des Anschlagdämpfers erfindungsgemäß auch dann gewährleistet ist, wenn gemäß dem Ausführungsbeispiel nach Fig. 3 und 5 ein Unterdruckraum 22 erzeugt ist und im Aufnahmeraum 11.1 stets Umgebungsdruck herrscht, die Öffnung 16 also entsprechend groß dimensioniert ist.

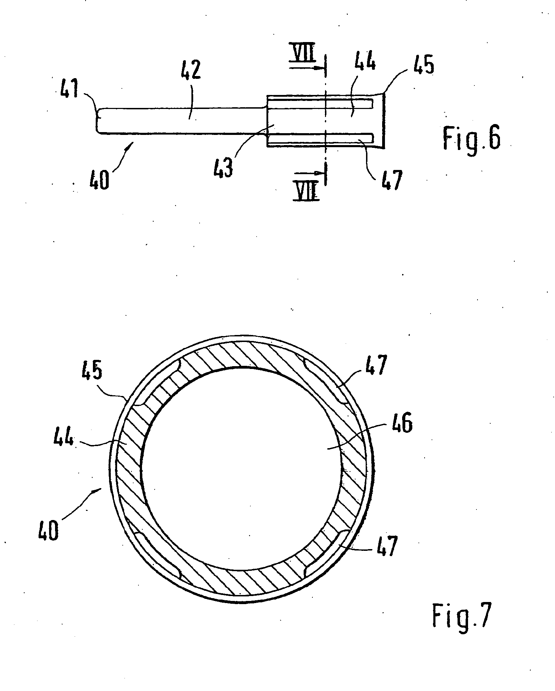

In den Fig. 6 bis 9 sind zwei Ausgestaltungsvarianten des Gleitelementes 40 im Detail dargestellt. Das Gleitelement 40 weist, wie vorstehend erläutert, einen Kolben 43 mit einem Balgabschnitt 44 auf. Wie die Fig. 7 zeigt, ist der Balgabschnitt 44 mit rillenförmigen Ausnehmungen 47 versehen. Diese erstrecken sich ausgehend von dem Anbindungsbereich des Kolbens 43 an die Kolbenstange 42 bis hin zu dem am Balgabschnitt 44 Bereiche unterschiedlicher Wandstärken zu schaffen. Damit ist der Balgabschnitt 44 in Bereiche mit unterschiedlicher Dehnfähigkeit untergliedert.

Im Bereich der Ausnehmungen 47 wird der Balgabschnitt 44 bei Beaufschlagung des Zylinders mit einem Überdruck im Aufnahmeraum 11 stärker gedehnt als in den übrigen Bereichen des Balgabschnittes 44.

Wie die Fig. 7 erkennen lässt, erstrecken sich die Ausnehmungen 47 des Balgabschnittes 44 über einen relativ großen Umfangsbereich. Die zwischen den einzelnen Ausnehmungen 47 verbleibenden Abschnitte des Balgabschnittes 44 mit geringerer Dehnfähigkeit steifen den Balgabschnitt 44 in Richtung der Mittellängsachse des Kolbens 43 aus.

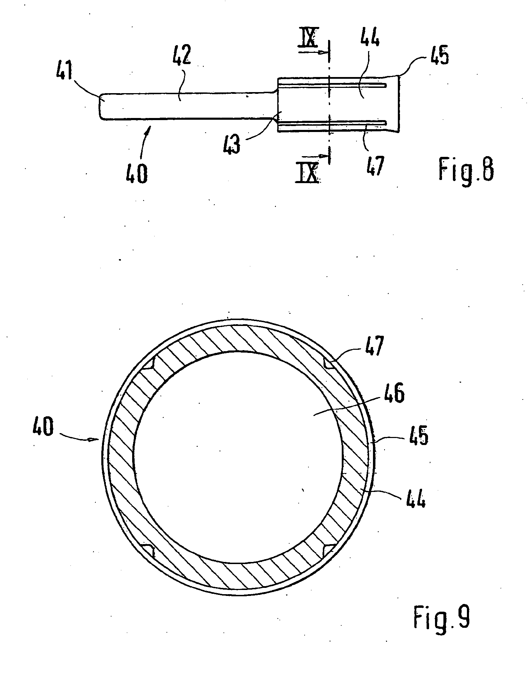

Die Fig. 8 und 9 zeigen eine Variante zu dem in den Fig. 6 und 7 dargestellten Gleitelement 40. Wie diese Zeichnungen erkennen lassen, sind die Ausnehmungen 47 als im Querschnitt V-förmige Rillen ausgebildet. Es wird somit deutlich, dass das Maß der Dehnfähigkeit des Balgabschnittes 44 über die Größe und die Form der Ausnehmungen 47 eingestellt werden können.

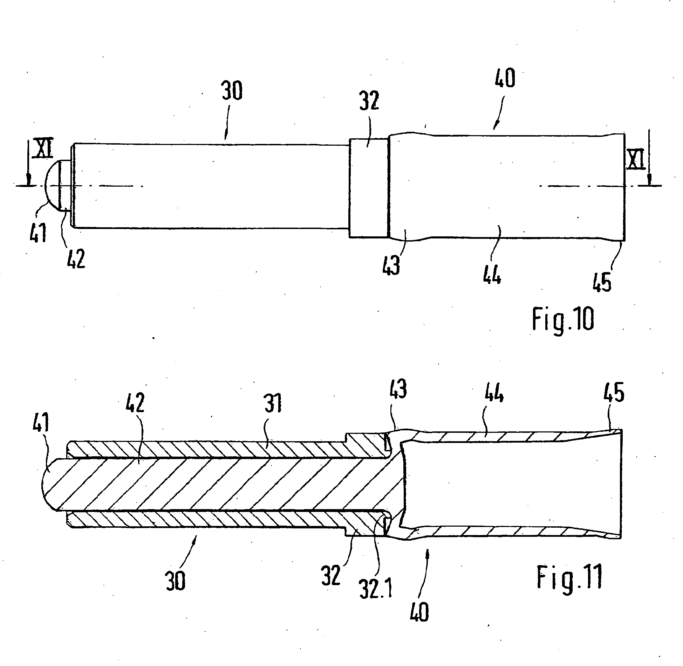

Die Fig. 10 und 11 zeigen eine weitere Ausgestaltungsvariante des Gleitelementes 40. Das Gleitelement 40 ist im Wesentlichen so aufgebaut, wie das in den vorstehend erläuterten Zeichnungen dargestellte Gleitelement 40.

Bei dem Gleitelement 40 gemäß Fig. 10 und 11 sind keine Ausnehmungen 47 vorgesehen, so dass der Balgabschnitt 44 ein gleichmäßiges Dehnverhalten aufweist.

Im Rahmen der Erfindung kann jedoch auch ein Balgabschnitt 44 mit Bereichen unterschiedlichen Dehnverhaltens, insbesondere gemäß den Gestaltungen nach Fig. 6 bis 9 verwendet sein.

Wie die Fig. 11 erkennen lässt, ist die Kolbenstange 42, wie in den Fig. 1 bis 5 dar-. gestellt, von einem Mantelteil 31 eines Stützkörpers 30 umgeben und ausgesteift. Der Stützkörper 30 weist einen Ansatz 32 auf. An den Ansatz 32 ist ein ringförmig umlaufender Vorsprung 32.1 angeformt. Dieser Vorsprung 32.1 wirkt auf den Kolbenboden des Kolbens 43 ein. Wenn infolge einer Verstellung des Kolbens 43 im Aufnahmeraum 11.1 ein Gegendruck gebildet wird und in die Kolbenstange 42 eine Kraft beispielsweise von einer Möbelklappe oder einer Schublade eingebracht wird, verstellt der Vorsprung 32.1 den Kolbenboden in Richtung der Verstellbewegung des Kolbens 43. Infolge der Verstellung des Kolbenbodens wird über das entstehende Biegemoment der Bereich des Kolbens 43 im Übergangsbereich zwischen Kolbenboden und Balgabschnitt 44 radial nach außen verstellt, so dass sich eine ringförmige Verbreiterung des Gleitelementes 40 in diesem Bereich ergibt. Damit bilden der Kolbenboden und er Verdickungsbereich eine Verstellanordnung. Der Außenwandungsbereich des Verdickungsbereiches bildet einen Bremsabschnitt, der sich an die Innenwandung des Aufnahmeraumes 11.1 anlegt. Mit diesem Bremsabschnitt kann die Verschiebebewegung des Gleitelementes 40 wirkungsvoll gebremst werden.

## Patentansprüche

1. Anschlagdämpfer mit einem Dämpferkörper (10) der einen Zylinder (11) aufweist, wobei in einem Aufnahmeraum (11.1) des Zylinders (11) ein Kolben (43) verstellbar geführt ist, wobei der Zylinder (11) eine Gleitfläche (18) aufweist, an der der Kolben (43) mit einem Dichtelement (45) anliegt, wobei infolge der mittels dem im Aufnahmeraum (11.1) gebildeten Luftdruck eine auf den Kolben (43) wirkende Bremskraft ausübbar ist, wobei der Aufnahmeraum (11.1) zum Abbau des Luftdruckes über eine luftleitende Verbindung mit der Umgebung in Verbindung steht,
**dadurch gekennzeichnet,**
**dass** das Dichtelement (45) des Kolbens (43) und die Gleitfläche (18) des Zylinders (11) sich zumindest bereichsweise über eine definierte Reibflächengeometrie berühren, und dass :
die Rauhtiefe der Gleitfläche (18) Ra < 1 µm und die Rauhtiefe der zugewandten Fläche des Dichtelementes (45) zumindest bereichsweise ≤ 4,5 µm ist, und/oder
**dass** die Oberflächenrauhtiefe des Dichtelementes (45) und/oder der Gleitfläche (18) von einer periodischen Struktur, beisplelsweise einer Rillenstruktur, erzeugt ist.

2. Anschlagdämpfer nach Anspruch 1,
**dadurch gekennzeichnet,**
**dass** das Dichtelement (45) aus einem weichelastischem Werkstoff, beispielsweise aus einem Elastomer, insbesondere thermoplastischem Elastomer, insbesondere auf Olefinbasis gebildet ist und
**dass** die Oberflächen des Dichtelements (45) in dem der Gleitfläche (18) zu gewandten Bereich eine Rauhtiefe Ra ≥ 0,4 µm aufweist, und
**dass** die Gleitfläche (18) des Zylinder (11) zumindest bereichsweise eine Rauhtiefe Ra ≥ 0,05 µm aufweist.

3. Anschlagdämpfer nach Anspruch 1 oder 2,
**dadurch gekennzeichnet,**
**dass** die Rillen der Rillenstruktur in ihrer Längserstreckung quer zur Bewegungsrichtung des Kolbens (43) angeordnet sind, oder
**dass** die Rillen (18.1) der Rillenstruktur in ihrer Längserstreckung quer zur Bewegungsrichtung des Kolbens (43) angeordnet sind,
**dass** die Rillen (18.1) der Rillenstruktur umlaufend und quer zur Bewegungsrichtung des Kolbens (43) in die Gleitfläche (18) eingetieft sind, und dass die Rillen (18.1) im Winkel ≥ 0 und < 90° vorzugsweise im Winkel ≥ 0 und 5° zur Bewegungsrichtung (v) des Kolbens (43) stehen.

4. Anschlagdämpfer nach Anspruch 3,
**dadurch gekennzeichnet,**
**dass** der Anstellwinkel der Rillen (18.1) so gewählt ist, dass das ringförmig umlaufende Dichtelement (45) über seinen gesamten Umfang nur eine geringe Anzahl von Rillen (18.1) übergreift.

5. Anschlagdämpfer nach einem der Ansprüche 1 bis 4,
**dadurch gekennzeichnet,**
**dass** der Kolben (43) einen Balgabschnitt (44) aufweist, der abhängig von den Druckverhältnissen im Aufnahmeraum (11.1) in Wirkverbindung mit dem Zylinder (11) steht.

6. Anschlagdämpfer nach Anspruch 5,
**dadurch gekennzeichnet,**
**dass** der Balgabschnitt (44) zumindest in dem mit dem Zylinder (11) in Kontakt tretenden Wirkbereich Bereiche mit unterschiedlicher Dehnfähigkeit aufweist, und/oder
**dass** die Bereiche unterschiedlicher Dehnfähigkeit von Teilen des Balgabschnittes (44) gebildet sind, die unterschiedliche Wandungsstärken aufweisen.

7. Anschlagdämpfer nach einem der Ansprüche 5 bis 6,
**dadurch gekennzeichnet,**
**dass** der Balgabschnitt (44) rillenförmige Ausnehmungen (47) aufweist, die eine Querschnittsänderung des Balgabschnittes (44) bilden, oder
**dass** der Balgabschnitt (44) rillenförmige Ausnehmungen (47) aufweist, die eine Querschnittänderung des Balgabschnittes (44) bilden, und
**dass** die Ausnehmungen (47) in Richtung der der Verschiebebewegung des Kolbens (43) oder im Winkel kleiner als 90° zur Richtung der Verschiebebewegung oder spiralförmig verlaufen.

8. Anschlagdämpfer nach einem der Ansprüche 1 bis 7,
**dadurch gekennzeichnet,**
**dass** in Abhängigkeit von der Höhe der auf den Kolben (43) entgegen der Verstellrichtung des Kolbens (43) einwirkende Gegenkraft eine Verstellanordnung des Kolbens (43) betätigbar ist, und
**dass** die Verstellanordnung einen Bremsabschnitt in Wirkverbindung mit dem Zylinder (11) zur Dämpfung der Verstellbewegung des Kolbens bringt.

9. Anschlagdämpfer nach Anspruch 8,
**dadurch gekennzeichnet,**
**dass** der Kolben (43) an eine Kolbenstange (42) angeschlossen ist, und dass die Verstellanordnung mittels der Kolbenstange (42) betätigbar ist, oder dass der Kolben (43) an eine Kolbenstange (42) angeschlossen ist, und dass die Verstellanordnung mittels der Kolbenstange (42) betätigbar ist, und dass bei Betätigung der Verstellanordnung die Querschnittsabmessung des Bremsabschnittes veränderbar ist.

10. Anschlagdämpfer nach einem der Ansprüche 5 bis 9,
**dadurch gekennzeichnet,**
**dass** der Balgabschnitt (44) und der Kolben (43) einteilig miteinander verbunden sind und/oder
**dass** die Kolbenstange (42) einteilig an den Kolben (43) angeformt ist, und/oder
**dass** die Kolbenstange mittels eines Mantelteils ausgestreift ist.

11. Anschlagdämpfer nach einem der Ansprüche 9 bis 10,
**dadurch gekennzeichnet,**
**dass** der Kolbenstange (42) ein Stützkörper (30) zugeordnet ist oder diese einen solchen aufweist,
**dass** der Stützkörper (30) eine Anschlagseite aufweist, die außerhalb des Dämpferkörpers (10) angeordnet ist, und
**dass** sich der Stützkörper (30) über einen Absatz (32) an dem Kolben (43) abgestützt ist, und/oder
**dass** die Kolbenstange (42) auf ihrer dem Kolben (43) abgewandten Seite ein Prallstück (41) aus weichelastischem Material bildet.

12. Anschlagdämpfer nach einem der Ansprüche 5 bis 11,
**dadurch gekennzeichnet,**
**dass** der Balgabschnitt (44) einen zylinderförmigen Teil aufweist, der im Abstand zur Innenwandung des Zylinders (11) gehalten ist, und
**dass** der von dem zylinderförmigen Teil umgebene Bereich einem Druckraum des Zylinders (11) zugeordnet ist, oder
**dass** der Balgabschnitt (44) einen zylinderförmigen Teil aufweist, der im Abstand zur Innenwandung des Zylinders (11) gehalten ist, und
**dass** der von dem zylinderförmigen Teil umgebene Bereich einem Druckraum des Zylinders (11) zugeordnet ist, und
**dass** die Bereiche unterschiedlicher Dehnfähigkeit im Bereich des Zylinderförmigen Teils des Balgabschnittes (44) angeordnet sind.

13. Anschlagdämpfer nach Anspruch 12,
**dadurch gekennzeichnet,**
**dass** der zylinderförmige Teil des Balgabschnittes (44) eine Federaufnahme (46) bildet, in der eine Feder (50) zumindest teilweise aufgenommen ist, und dass die Feder (50) den Kolben (43) entgegen der Einschubbewegung des Kolbens (43) in den Zylinder (11) gegenüber dem Zylinder abstützt, oder dass der zylinderförmige Teil des Balgabschnittes (44) eine Federaufnahme (46) bildet, in der eine Feder (50) zumindest teilweise aufgenommen ist, und dass die Feder (50) den Kolben (43) entgegen der Einschubbewegung des Kolbens (43) in den Zylinder (11) gegenüber dem Zylinder abstützt, und dass das am Balgabschnitt (44) angeformte Dichtelement (45) einen Druck- und einen Unterdruckraum des Zylinders (11) gegeneinander abdichtet, und/oder
**dass** sich die Bereiche unterschiedlicher Dehnfähigkeit bis hin zu dem angeformten Dichtelement (45) erstrecken.

14. Anschlagdämpfer nach Anspruch 13,
**dadurch gekennzeichnet,**
**dass** der Unterdruck- und/oder der Druckraum mittels wenigstens einer Öffnung (16,16.1) mit der Umgebung in luftleitender Verbindung stehen, oder, dass der Unterdruck- und/oder der Druckraum mittels wenigstens einer Öffnung (16,16.1) mit der Umgebung in luftieitender Verbindung stehen und dass wenigstens eine der Öffnungen (16,16.1) einen Durchmesser D < 0,2 mm, vorzugsweise < 0,1 mm aufweist.

15. Anschlagdämpfer nach Anspruch 14
**dadurch gekennzeichnet,**
**dass** das Verhältnis der Querschnittsfläche des Kolbens (43) in dem dem Hohlraum zugewandten Bereich zu dem Öffnungsquerschnitt der Öffnung (16.16.1) größer als 4000/1 ist, oder dass das Verhältnis der Querschnittsfläche des Kolbens (43) in dem dem Hohlraum zugewandten Bereich zu dem Öffnungsquerschnitt der Öffnung (16,1,6.1) größer als 4000/1 ist und dass die Öffnung (16,16.1) einen Durchmesser von D < 0,2 mm, vorzugsweise < 0,1 mm aufweist und/oder
**dass** das Verhältnis der Querschnittsfläche des Kolbens (43) in dem dem Aufnahmeraum (11.1) zugewandten Bereich zu dem Öffnungsquerschnitt der Öffnung (16,16.1) größer als 4000/1 ist.

## Claims

1. Stop damper with a damper body (10) which has a cylinder (11), wherein a piston (43) is displaceably guided in a receiving chamber (11.1) of the cylinder (11), wherein the cylinder (11) has a sliding surface (18) against which the piston (43) bears with a sealing element (45), wherein a braking force acting on the piston (43) can be exerted as a consequence of the air pressure formed in the receiving chamber (11.1), wherein the receiving chamber (11.1) is connected to the environment via an air-conducting connection in order to reduce the air pressure, **characterized in that** the sealing element (45) of the piston (43) and the sliding surface (18) of the cylinder (11) are in contact with one another at least in certain regions over a defined frictional surface geometry, and **in that** the roughness depth of the sliding surface (18) Ra < 1 µm and the roughness depth of the facing surface of the sealing element (45) is ≤ 4.5 µm at least in certain regions, and/or
**in that** the surface roughness depth of the sealing element (45) and/or of the sliding surface (18) is produced by a periodic structure, for example a groove structure.

2. Stop damper according to Claim 1,
**characterized in that**
the sealing element (45) is formed from a soft elastic material, for example from an elastomer, in particular a thermoplastic elastomer, in particular based on an olefin, and **in that** the surfaces of the sealing element (45) in the region facing the sliding surface (18) have a roughness depth Ra ≥ 0.4 µm, and **in that** the sliding surface (18) of the cylinder (11) has a roughness depth Ra ≥ 0.05 µm at least in certain regions.

3. Stop damper according to Claim 1 or 2, **characterized in that**
the grooves (18.1) of the groove structure are arranged in their longitudinal extent transversely to the movement direction of the piston (43), **in that** the grooves (18.1) of the groove structure are cut into the sliding surface (18) in an encircling manner and transversely to the movement direction of the piston (43), and **in that** the grooves (18.1) are at an angle ≥ 0 and < 90°, preferably at an angle ≥ 0 and 5°, to the movement direction (v) of the piston (43).

4. Stop damper according to Claim 3,
**characterized in that**
the incidence angle of the grooves (18.1) is selected such that the annularly encircling sealing element (45) engages over its total circumference only over a small number of grooves (18.1).

5. Stop damper according to one of Claims 1 to 4, **characterized in that**
the piston (43) has a bellows portion (44) which is operatively connected to the cylinder (11) as a function of the pressure conditions in the receiving chamber (11.1).

6. Stop damper according to Claim 5,
**characterized in that**
the bellows portion (44) has, at least in the active region coming into contact with the cylinder (11), regions of different expansion capabilities, and/or **in that** the regions of different expansion capabilities are formed by parts of the bellows portion (44) which have different wall thicknesses.

7. Stop damper according to either of Claims 5 and 6, **characterized in that**
the bellows portion (44) has groove-shaped cutouts (47) which form a cross-sectional change of the bellows portion (44), and **in that** the cutouts (47) extend in the direction of the displacement movement of the piston (43) or at an angle of less than 90° to the direction of the displacement movement or spirally.

8. Stop damper according to one of Claims 1 to 7, **characterized in that**
a displacement arrangement of the piston (43) can be actuated as a function of the size of the counter-force acting on the piston (43) counter to the displacement direction of the piston (43), and **in that** the displacement arrangement brings a braking portion into operative connection with the cylinder (11) for damping the displacement movement.

9. Stop damper according to Claim 8,
**characterized in that**
the piston (43) is connected to a piston rod (42), and **in that** the displacement arrangement can be actuated by means of the piston rod (42), and **in that** on actuating the displacement arrangement the cross-sectional dimension of the braking portion can be changed.

10. Stop damper according to one of Claims 5 to 9, **characterized in that**
the bellows portion (44) and the piston (43) are connected to one another in one part, and/or **in that** the piston rod (42) is integrally formed on the piston (43) in one part, and/or **in that** the piston rod is stiffened by means of a casing part.

11. Stop damper according to either of Claims 9 and 10,
**characterized in that**
the piston rod (42) is assigned a supporting body (30) or has such a supporting body, **in that** the supporting body (30) has a stop side which is arranged outside the damper body (10), and in the supporting body (30) is supported on the piston (43) via a shoulder (32), and/or **in that** the piston rod (42) forms on its side facing away from the piston (43) an impact piece (41) of soft elastic material.

12. Stop damper according to one of Claims 5 to 11, **characterized in that**
the bellows portion (44) has a cylindrical part which is held at a distance from the inner wall of the cylinder (11), and **in that** the region surrounded by the cylindrical part is assigned to a pressure chamber of the cylinder (11), and **in that** the regions of different expansion capabilities are arranged in the region of the cylindrical part of the bellows portion (44).

13. Stop damper according to Claim 12,
**characterized in that**
the cylindrical part of the bellows portion (44) forms a spring receptacle (46) in which a spring (50) is at least partially accommodated, and **in that** the spring (50) supports the piston (43) with respect to the cylinder counter to the pushing-in movement of the piston (43) into the cylinder (11), and **in that** the sealing element (45) integrally formed on the bellows portion (44) seals a pressure chamber and a negative pressure chamber of the cylinder (11) with respect to one another, and/or **in that** the regions of different expansion capabilities extend as far as the integrally formed sealing element (45).

14. Stop damper according to Claim 13,
**characterized in that**
the negative pressure chamber and/or the pressure chamber are in air-conducting connection with the environment by means of at least one opening (16, 16.1), and **in that** at least one of the openings (16, 16.1) has a diameter D < 0.2 mm, preferably < 0.1 mm.

15. Stop damper according to Claim 14,
**characterized in that**
the ratio of the cross-sectional area of the piston (43) in the region facing the hollow space to the opening cross section of the opening (16, 16.1) is greater than 4000/1 and **in that** the opening (16, 16.1) has a diameter D < 0.2 mm, preferably < 0.1 mm, and/or in that the ratio of the cross-sectional area of the piston (43) in the region facing the receiving chamber (11.1) to the opening cross section of the opening (16, 16.1) is greater than 4000/1.

## Revendications

1. Amortisseur de butée avec un corps d'amortisseur (10) qui présente un cylindre (11), dans lequel un piston (43) est guidé de façon déplaçable dans une chambre de réception (11.1) du cylindre (11), dans lequel le cylindre (11) présente une face de glissement (18) sur laquelle le piston (43) est appliqué avec un élément d'étanchéité (45), dans lequel une force de freinage agissant sur le piston (43) peut être exercée à cause de la pression d'air générée dans la chambre de réception (11.1), dans lequel la chambre de réception (11.1) est en communication avec l'atmosphère par une communication de conduite d'air en vue d'abaisser la pression d'air, **caractérisé en ce que** l'élément d'étanchéité (45) du piston (43) et la face de glissement (18) du cylindre (11) se touchent au moins localement sur une géométrie de face de frottement définie et **en ce que** la profondeur de la rugosité de la face de glissement (18) Ra < 1 µm et la profondeur de la rugosité de la face opposée de l'élément d'étanchéité (45) est au moins localement 4,5 µm, et/ou **en ce que** la profondeur de la rugosité de la surface de l'élément d'étanchéité (45) et/ou de la face de glissement (18) est produite à partir d'une structure périodique, en particulier à partir d'une structure en sillons.

2. Amortisseur de butée selon la revendication 1, **caractérisé en ce que** l'élément d'étanchéité (45) est constitué d'un matériau élastique souple, par exemple d'un élastomère, en particulier d'un élastomère thermoplastique notamment à base d'oléfine, et **en ce que** la surface de l'élément d'étanchéité (45) présente, dans la zone tournée vers la face de glissement (18), une profondeur de rugosité Rua ≥ 0,4 µm, et **en ce que** la face de glissement (18) du cylindre (11) présente au moins localement une profondeur de rugosité Ra ≥ 0,05 µm.

3. Amortisseur de butée selon la revendication 1 ou 2, **caractérisé en ce que** les sillons (18.1) de la structure en sillons sont disposés avec leur extension longitudinale transversalement à la direction de mouvement du piston (43), **en ce que** les sillons (18.1) de la structure en sillons sont creusés dans la face de glissement (18) en périphérie et transversalement à la direction de mouvement du piston (43), et **en ce que** les sillons (18.1) forment un angle ≥ 0° et < 90°, de préférence un angle ≥ 0° et 5° avec la direction de mouvement (v) du piston (43).

4. Amortisseur de butée selon la revendication 3, **caractérisé en ce que** l'angle d'inclinaison des sillons (18.1) est choisi de telle manière que l'élément d'étanchéité (45) périphérique en forme d'anneau ne recouvre sur tout son périmètre qu'un petit nombre de sillons (18.1).

5. Amortisseur de butée selon l'une quelconque des revendications 1 à 4, **caractérisé en ce que** le piston (43) présente une section de soufflet (44), qui est en liaison active avec le cylindre (11) en fonction des conditions de pression dans la chambre de réception (11.1).

6. Amortisseur de butée selon la revendication 5, **caractérisé en ce que** la section de soufflet (44) présente des zones d'extensibilité différente au moins dans la zone utile entrant en contact avec le cylindre (11), et/ou **en ce que** les zones d'extensibilité différente sont formées par des parties de la section de soufflet (44), qui présentent des épaisseurs de paroi différentes.

7. Amortisseur de butée selon l'une quelconque des revendications 5 à 6, **caractérisé en ce que** la section de soufflet (44) présente des évidements en forme de sillons (47), qui provoquent un changement de la section transversale de la section de soufflet (44), et **en ce que** les évidements (47) s'étendent dans la direction du mouvement de déplacement du piston (43) ou sous un angle inférieur à 90° par rapport à la direction du mouvement de déplacement ou en forme de spirale.

8. Amortisseur de butée selon l'une quelconque des revendications 1 à 7, **caractérisé en ce qu'**un dispositif de déplacement du piston (43) peut être actionné en fonction du niveau de la force antagoniste agissant sur le piston (43) en opposition à la direction de déplacement du piston (43), et **en ce que** le dispositif de déplacement amène une section de frein en liaison active avec le cylindre (11) pour amortir le mouvement de déplacement du piston.

9. Amortisseur de butée selon la revendication 8, **caractérisé en ce que** le piston (43) est relié à une tige de piston (42) et **en ce que** le dispositif de déplacement peut être actionné au moyen de la tige de piston (42), et **en ce que** la dimension de la section transversale de la section de frein peut être changée par actionnement du dispositif de déplacement.

10. Amortisseur de butée selon l'une quelconque des revendications 5 à 9, **caractérisé en ce que** la section de soufflet (44) et le piston (43) sont reliés en une seule pièce l'un à l'autre et/ou **en ce que** la tige de piston (42) est formée d'une seule pièce sur le piston (43), et/ou **en ce que** la tige de piston est gainée au moyen d'une pièce d'enveloppe latérale.

11. Amortisseur de butée selon l'une quelconque des revendications 9 à 10, **caractérisé en ce qu'**un corps de soutien (30) est associé à la tige de piston (42) ou celle-ci présente un tel corps, **en ce que** le corps de soutien (30) présente un côté de butée qui est disposé à l'extérieur du corps d'amortisseur (10), et **en ce que** le corps de soutien (30) est appuyé sur le piston (43) au moyen d'un épaulement (32), et/ou **en ce que** la tige de piston (42) forme une pièce d'impact (41) en matériau élastique souple sur son côté situé à l'opposé du piston (43).

12. Amortisseur de butée selon l'une quelconque des revendications 5 à 11, **caractérisé en ce que** la section de soufflet (44) présente une partie cylindrique, qui est maintenue à distance de la paroi intérieure du cylindre (11), et **en ce que** la zone entourée par la partie cylindrique est associée à une chambre de pression du cylindre (11), et **en ce que** les zones d'extensibilité différente sont disposées dans la zone de la partie cylindrique de la section de soufflet (44).

13. Amortisseur de butée selon la revendication 12, **caractérisé en ce que** la partie cylindrique de la section de soufflet (44) forme un logement de cylindre (46), dans lequel un ressort (50) est logé au moins partiellement, et **en ce que** le ressort (50) soutient le piston (43) contre le mouvement d'enfoncement du piston (43) dans le cylindre (11) par rapport au cylindre, et **en ce que** l'élément d'étanchéité (45) formé sur la section de soufflet (44) sépare de façon étanche l'une de l'autre une chambre de pression et une chambre de dépression du cylindre (11), et/ou **en ce que** les zones d'extensibilité différente s'étendent jusqu'à l'élément d'étanchéité formé (45).

14. Amortisseur de butée selon la revendication 13, **caractérisé en ce que** la chambre de dépression et/ou la chambre de pression sont en communication de conduite d'air avec l'atmosphère au moyen d'au moins une ouverture (16, 16.1) et **en ce qu'**au moins une des ouvertures (16, 16.1) présente un diamètre D < 0,2 mm, de préférence < 0,1 mm.

15. Amortisseur de butée selon la revendication 14, **caractérisé en ce que** le rapport de la surface de section transversale du piston (43) dans la région tournée vers la cavité à la surface de section transversale d'ouverture de l'ouverture (16, 16.1) est supérieur à 4000/1 et **en ce que** l'ouverture (16, 16.1) présente un diamètre de D < 0,2 mm, de préférence < 0,1 mm, et/ou **en ce que** le rapport de la surface de section transversale du piston (43) dans la région tournée vers la chambre de réception (11.1) à la surface de section transversale d'ouverture de l'ouverture (16, 16.1) est supérieur à 4000/1.
